# EUROPEAN PATENT SPECIFICATION

(11) **EP 0 439 395 B1**
(45) Date of publication and mention of the grant of the patent: **17.04.1996**
(21) Application number: 91400132.6
(22) Date of filing: 21.01.1991
(51) Int. Cl.: C08K 5/10, C10M 105/38

(54) **Lubricants for thermoplastic compositions, compositions containing them, process of preparation and process for the manufacture of bottles**
Gleitmittel für thermoplastische Zusammensetzungen, diese enthaltende Zusammensetzungen, Verfahren zur Herstellung von Flaschen
Lubrifiants pour compositions thermoplastiques, composition en comportant, procédé de préparation et procédé de fabrication de bouteilles

(30) Priority: 23.01.1990 FR 9000742
(43) Date of publication of application: 31.07.1991
(73) Proprietor: LUZZATTO & FIGLIO, F-75008 Paris (FR)
(72) Inventor: Boussely, Jean, F-75018 Paris (FR)
(74) Representative: Casalonga, Axel

(56) References cited:
- EP-A- 0 210 750
- FR-A- 2 310 403
- GB-A- 2 034 331

## Description

The present invention relates to lubricanting compositions for thermoplastic compositions, of the type of behenic, arachidic, palmitic and stearic acid coesters of aliphatic polyols of alimentary quality and metal soaps of these coesters and thermoplastic compositions containing them, and to a process for the manufacture of these soaps and a process for producing bottles made of thermoplastic materials especially by extrusion blow-moulding.

It is known to incorporate lubricants, among other adjuvants, in processes for the manufacture of objects made of thermoplastic materials based on polyvinyl chloride (PVC), superchlorinated polyvinyl chloride or vinyl chloroacetate and mixtures thereof, and especially in the processes for the manufacture of bottles, for example for alimentary products such as mineral water, oils or beverages.

Among lubricants for PVC, a distinction is made between internal lubricants and external lubricants.

Internal lubricants impart processability to the thermoplastic composition during its treatment. In treatments using parisons, that is to say extrudates formed into a tube before blowing, internal lubricants give the parison the ability to flow uniformly and homogeneously through the dies and extruders.

Among other disadvantages, lack of internal lubrication results in lower rates and inhomogeneities in the parisons, which produce defects in the bottles which are obtained.

External lubricants are necessary so that the plastic does not stick to the dies, extruders and moulds.

A deficiency of external lubrication results in adhesions in hot moulds. The material which remains in the moulds blackens and makes the bottles produced unusable.

It has therefore appeared necessary, especially in bottle manufacture processes, to employ internal and external lubricants, and these products are generally costly.

Thus, it is known, for example, to employ oxidized or unoxidized polyethylene waxes, montanates and polyesters as external lubricants for thermoplastics. Their function is to reduce interfacial friction and they are employed in quantities ranging from 0.15 to 0.70 pphr, depending on the products (pphr means parts per hundred of resin).

The polyol behenic ester, called "pure behenate" is also known as an external lubricant; it is obtained by the esterification of polyols with organic acids, behenic acid being present in a proportion of more than 90%, the remaining 10% being represented by a mixture of arachidic and palmitostearic acids. This product is very costly.

It is known to employ esters of the glycerol palmitate or glycerol stearate type as internal lubricants, but these are seldom employed because they result in poor transparency in the case of bottles, and give rise to deposits in moulds, owing to the incompatibility of the products with the resins. FR 2 310 403 describes the use of esters of polyols with behenic acid as internal lubricant.

The present invention relates to a lubricanting composition for thermoplastic compositions, comprising at least one lubricant consisting of a coester resulting from the esterification of alimentary aliphatic polyols with a mixture of behenic, arachidic, palmitic and stearic acids in combination with at least one polyethylene wax as defined in the claims.

According to the invention, the proportion of behenic acid in this acid mixture is between 30 and 50% by weight.

A metal soap-coester mixture as defined in the claims is also a lubricant used in the invention.

While having a very appreciable external effect, these coesters surprisingly also have an effect as an internal lubricant.

In lubricating compositions for thermoplastic compositions and therefore in these thermoplastic compositions, this property of the compounds according to the invention makes it possible to reduce the proportion of other internal lubricants such as glycerol trihydroxystearate and the monoesters of stearic, lauric and ricinoleic acids.

These coesters, which are less costly than the highly pure montanates and behenates, can be employed instead and in place thereof.

The quality and the effectiveness of the lubricants are revealed when bottle manufacture processes are employed, and are usually tested by trials in calendering, extrusion and extrusion blow-moulding, as will become apparent from the examples.

The polyethylene waxes may be oxidized or otherwise.

Even in the presence of internal lubricants, polyethylene waxes by themselves give a good external lubrication in calendering and in extrusion but, in extrusion blow-moulding, the formulations prepared give an excessive shearing of the macromolecular chains. This shearing results in embrittlement of the hollow bodies obtained.

"Pure" behenates and montanates, without causing these shearing phenomena, are less effective as a lubricant, and used to present problems of transparency and of deposition in machines because of the melting points.

In bottle formulations, "pure behenates" of glycerol and of pentaerythritol give sticking times of the order of 18 to 20 minutes on a roll and polyethylene waxes by themselves give sticking times of the order of 27 to 28 minutes on a roll. Under the same conditions, the wax-coesters combination according to the invention makes it possible to achieve no-sticking times of more than 30 minutes.

The combination thus gives results which are better than those of the members of the combination and, as will be seen in the examples, for a given result it suffices to employ a smaller quantity thereof than the sum of the quantities of wax and of known lubricant.

Pentaerythritol or glycerol, and preferably glycerol, may especially be employed among the alimentary aliphatic polyols.

The proportion of behenic acids in the acid mixture is advantageously between 35 and 45%, and is preferably equal to 38 ± 2%.

A metal soap of the esters, according to the invention, means the result of bringing the above coesters into contact with a metal oxide or hydroxide which reacts with acids, the saponification reaction taking place in situ, based on calcium, magnesium or zinc, and more particularly of calcium and zinc soaps.

The coesters themselves may be prepared in a conventional manner by bringing glycerol or pentaerythritol into contact with the suitable acid mixture to obtain the coester, in the presence of a catalyst of the zinc oxide, sodium hydroxide or para-toluenesulphonic acid type.

Stearic, palmitic, arachidic, behenic and lauric acids and mixtures thereof are the acids which react with the oxides or hydroxides in the in-situ saponification reaction.

A "behenic" soap means the metal soap prepared in situ from the same acid mixture as that resulting in the coester. A "stearic" soap means the soap prepared in situ from stearic acid.

Prepared "in situ" means that the saponification reaction is carried out by adding to the coester according to the invention, on the one hand, the metal oxide or hydroxide and, on the other hand, the acid or mixture of acids in a quantity of 1/2 (2 moles of acid per 1 mole of metal) and by kneading during the saponification period until a homogeneous mixture is obtained. The soap in the coester-soap mixture which is prepared in situ as above described is comprised in an amount of up 25 % by weight.

The invention also relates to the process for the manufacture of the coester-soap mixture, which is prepared in situ. According to the invention, a coester and an acid chosen from stearic, lauric, palmitic, arachidic and behenic acids and mixtures thereof are brought into contact with an oxide or hydroxide of a metal chosen from calcium, magnesium and zinc, the saponification reaction taking place in situ.

The invention also relates to the metal soaps obtained according to these processes. They are particularly advantageous, because they are perfectly miscible with the coester in which they are prepared. The melting points of the lubricating compositions are surprisingly lower than the expected melting points.

As a preferred proportion of metal in the coester soaps according to the invention, the Applicant Company has demonstrated that proportions corresponding to 1.2 to 2% of metal ions in the compositions are particularly advantageous.

The waxes employed may be, for example, neutral polyethylene waxes or oxidized polyethylene waxes obtained by the polymerization of ethylene, these waxes generally having a molecular weight of between 2,000 and 9,000. In the case of the oxidized waxes, the acid value is preferably approximately equal to 15.

The present invention also relates to thermoplastic compositions for bottles, comprising at least the thermoplastic material, lubricants or lubricating compositions according to the invention, and stabilizers.

According to the invention, the wax/lubricant proportion in these lubricating compositions is approximately between 1/10 and 4/3.

Thus, the proportions of wax in the lubricating compositions are approximately between 0.1 and 0.4 pphr, while the proportions of coesters are between 0.3 and 1 pphr.

According to the invention, the thermoplastic compositions preferably comprise 0.2 to 1.5 pphr of lubricating compositions.

The thermoplastic material is usually based on polyvinyl chloride (PVC), superchlorinated polyvinyl chloride, vinyl chloroacetate and a mixture thereof.

The thermoplastic material may be in the form of dry powder (dry blend), a granule mix (compound) or a pellet mix.

Apart from the lubricants, the bottle formulations usually include stabilizers and impact improvers, also known as " impact modifiers ", of the type known by the name of MBS or ABS. They also include processing agents, known by the name of "processing aids", such as styrene-acrylonitrile, methyl or butyl methacrylate, for example, and colorants. The stabilizers may be of the usual metal, and in particular zinc, octoate or stearate type. These stabilizers are used in particular to trap the excess chlorine.

The thermoplastic compositions according to the invention are described here more particularly in their application to the manufacture of bottles, a field in which the external appearance of the product obtained is of very great commercial importance. However, the use of these thermoplastic compositions in their application in the fields of PVC, polyvinyl chloride sheet or tube or other objects is not ruled out.

The present invention also relates to a process for the manufacture of bottles employing the lubricants and lubricating compositions such as are described above.

Other advantages and characteristics of the invention will become apparent on reading the examples below. Example 1 is given by way of comparison.

In the following examples the coester according to the invention has the following proportions of acids:
- arachidic acid (C₂₀,) 10
- behenic acid (C₂₂) 37
- palmitic acid (C₁₀) 7
- stearic acid (C₁₈) 46

"Coester of glycerol " (or of pentaerythritol) means a coester product of the esterification of glycerol (or of pentaerythritol) with the above acid mixture.

In the examples below, in the case of the thermoplastic material, an indication is given of, on the one hand, the process used for the polymerization of the vinyl resin (in bulk, in suspension or in emulsion) and, on the other hand, the K value (Kw) of the resin (viscosity measured after introducing 0.25 g of resin into 50 cm³ of cyclohexanone). This K value can assume values from 50 to 67.

As examples of a resin which can be employed, there may be mentioned the resins marketed, for example, by Atochem, Solvay, EMC, ICI, BASF, Hoechst, Occidental Petroleum or Goodrich.

The polyethylene wax employed may be, for example, AC 316 from Allied Corporation, PE 190 and PE 191 from Hoechst, or A₄ from BASF.

In the examples below, the blue is a pigment of a commonly employed kind, and for example Ultramarine Blue from Reckitt.

### EXAMPLES 1 to 6 : : Sticking to a roll heated to 210°C.

### COMPARATIVE EXAMPLE 1

The thermoplastic composition has the following composition:

| | |
|---|---|
| Bulk PVC Kw 57/58 | 100 |
| Impact modifier | 10 |
| Processing aid | 1 |
| Epoxidized soya oil | 5 |
| Calcium stearate | 0.30 |
| Zinc octoate (22% metal) | 0.08 |
| Glycerol hydroxystearate | 1.50 |
| Ethylene glycerol montanate | 0.40 |
| DHP | 0.20 |

The epoxidized soya oil is employed as a stabilizer, the calcium stearate as a stabilizer with external lubricant action, and the zinc octoate as a stabilizer without lubricating action. The glycerol hydroxystearate is an internal lubricant, the ethylene glycol montanate an external lubricant. DHP, dihydroxypyridine, is a stabilizer.

No sticking is observed up to 18 minutes.

In the examples illustrating the invention below, the formulation of the thermoplastic compositions is comparable with the formulation described in Example 1.

### EXAMPLE 2

The composition employed has the formulation:

| | |
|---|---|
| Bulk PVC Kw 57/58 | 100 |
| Impact modifier | 10 |
| Processing aid | 1 |
| Epoxidized soya oil | 5 |
| Calcium stearate | 0.30 |
| Zinc octoate | 0.08 |
| Glycerol hydroxystearate | 1 |
| Glycerol coester | 0.40 |
| Oxidized polyethylene wax | 0.20 |
| DHP | 0.20 |

The ethylene glycol montanate was replaced with a coester according to the invention, in combination with an oxidized polyethylene wax.

The quantity of glycerol hydrostearate needed is lower than that in Example 1.

No sticking is observed up to 32 minutes.

### EXAMPLES 3 and 4

No sticking is observed up to 32 minutes when the DHP marketed by M & T is replaced in the formulation of Example 2 with the same quantities of Rhodiastab, marketed by Rhône-Poulenc, or by a mixture of Rhodiastab and DHP.

### EXAMPLES 5 and 6

No sticking is observed up to 32 minutes in the formulation of Example 2 on adding 0.1 pphr of antioxidant of the Irganox 1076 type or 0.1 pphr of organic phosphite, of stearyl dipentaerythritol as additional antioxidant stabilizer.

### EXAMPLES 7 to 11

A formulation similar to that of Example 2 was tested, the glycerol coester according to the invention being replaced by its calcium soap, prepared in situ from stearic acid.

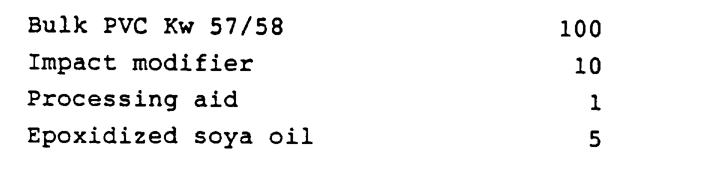

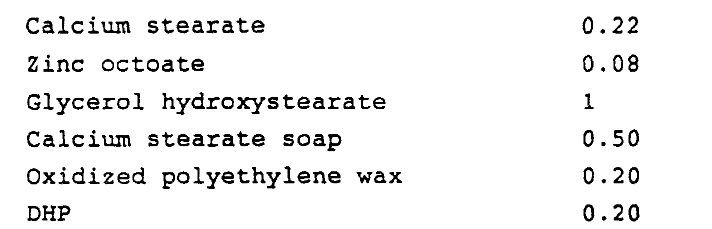

No sticking is observed up to 32 to 33 minutes.

### EXAMPLES 8 and 9

The same sticking time is observed when DHP is replaced by Rhodiastab or by a mixture of the two in the formulation described in Example 7.

### EXAMPLES 10 and 11

No sticking is observed up to 33 minutes when 0.1 pphr of organic phosphite or of Irganox is added to the formulation described in Example 7.

### EXAMPLES 12 to 17

Tests were conducted with a formulation similar to the formulation of Example 7, in which the calcium soap is prepared in situ from a mixture of behenic, arachidic, stearic and palmitic acids, in the same proportions as the acid mixture from which the coester is produced. The same results were obtained.

### EXAMPLES 18 to 23 : Production of bottles by extrusion blow-moulding.

Extrusion blow-moulding trials were carried out on a machine known by the name of ADS, using the following formulations:

### EXAMPLE 18

| | |
|---|---|
| Bulk PVC Kw 57/58 | 100 |
| Impact modifier | 10 |
| Processing aid | 1 |
| Epoxidized soya oil | 5 |
| Oxidized polyethylene wax | 0.20 |
| Calcium stearate | 0.30 |
| Zinc octoate | 0.08 |
| DHP | 0.20 |
| Glycerol hydroxystearate | 1.20 |
| Glycerol coester | 0.40 |
| Blue | 0.07 |

The extrusion blow-moulding temperatures in the machine were set according to the following temperature profile: 150, 155, 150 and 146°C. These temperatures correspond to temperatures of between 190 and 195°C at the core of the material.

The bottles were of good quality.

The bottles were ground up and the material rerun a second time; the bottles obtained were ground up again and run through a third time, and the bottles obtained were of good quality and their colour was acceptable.

No abnormal trace of deposit was observed in the moulds.

### EXAMPLE 19

A formulation identical with that of Example 18 was employed.

The glycerol coester according to the invention was replaced with its calcium soap, prepared from the same acid mixture as that from which the coester was produced.

The bottles produced were ground up and rerun twice. No trace of deposit was observed in the moulds and the colour was good.

### EXAMPLE 20

The formulation of Example 19 was reproduced with the calcium stearate soap.

After three runs the colour was good and no trace of deposit was observed in the moulds.

The compositions containing soaps prepared in situ, therefore, gave no deposit in the moulds. Their melting point, of 110 to 120°C instead of 160 to 180°C in the case of the usual calcium stabilizers, gave a better compatibility with the PVC thermoplastic material and a better distribution within the mixtures in the form of dry powder (dry blend).

### EXAMPLES 21 to 23

The glycerol coester according to the invention was replaced in the formulation described in Example 18 by the pentaerythritol coester, its calcium "behenic" soap and its calcium "stearic" soap. Similar results were obtained.

### EXAMPLES 24 to 46 : Effect of calendering and extrusion blow-moulding.

### COMPARATIVE EXAMPLE 24

The following formulation was tested.

| | |
|---|---|
| Suspension PVC | 100 |
| Impact modifier | 10 |
| Processing aid | 1 |
| Epoxidized soya oil | 5 |
| Calcium stearate | 0.30 |
| Zinc octoate | 0.08 |
| Glycerol hydroxystearate | 1 |
| Oxidized polyethylene wax | 0.20 |
| DHP or Rhodiastab | 0.20 |
| Ethylene glycol montanate | 0.40 |

No sticking was observed up to 31 minutes.

### EXAMPLE 25

The same formulation as in Example 24 was employed, the ethylene glycol montanate being replaced with the zinc soap, prepared from stearic acid, zinc oxide and glycerol coester, the zinc "stearic" soap.

| | |
|---|---|
| Suspension PVC | 100 |
| Impact modifier | 10 |
| Processing aid | 1 |
| Epoxidized soya oil | 5 |
| DHP | 0.20 |
| Zinc stearate soap | 0.50 |
| Zinc octoate | 0.04 |
| Calcium stearate | 0.30 |
| Oxidized polyethylene wax | 0.20 |
| Glycerol hydroxystearate | 1 |

The quantity of zinc octoate can be reduced; no sticking was observed up to 32 minutes and the colour is better during the first 10 minutes. Zinc can therefore be employed instead of calcium.

### EXAMPLES 26 and 27

The formulations of Examples 13 and 19, in which the calcium was replaced by zinc, were reproduced. Sticking times of 31 and 32 minutes respectively were obtained with a good initial colour.

### EXAMPLE 28

In the case of the following formulation:

| | |
|---|---|
| Bulk PVC Kw 57/58 | 100 |
| Impact modifier | 10 |
| Processing aid | 1 |
| Epoxidized soya oil | 5 |
| Calcium stearate | 0.30 |
| Zinc octoate | 0.03 |
| Zinc soap | 0.50 |
| Oxidized polyethylene wax | 0.25 |
| Glycerol hydroxystearate | 0.85 |
| DHP | 0.20 |

in which the zinc soap, prepared in situ in the glycerol coester with stearic acid was employed for the saponification, no sticking was observed for 32 minutes.

### EXAMPLES 29 and 30

The same formulation as in Example 28 was tested in the case of the zinc soap prepared in situ in the pentaerythritol coester; no sticking was observed for 32 minutes and the initial colour was very good.

When the DHP in this same composition was replaced with Rhodiastab, instances of sticking were observed from 31 minutes onwards.

### EXAMPLE 31, COMPARATIVE

Stabilizers of the hydrotalcite type tend to give a cloudiness in the presence of polyol montanate.

A formulation of this kind was prepared and tested:

| | |
|---|---|
| PVC | 100 |
| Impact modifier | 10 |
| Processing aid | 1 |
| Soya oil | 5 |
| Hydrotalcite | 0.50 |
| Zinc stearate | 0.25 |
| Glycerol hydroxystearate | 1 |
| Glycol montanate | 0.40 |
| Oxidized polyethylene wax | 0.20 |
| DHP | 0.20 |

No sticking was observed for 29 minutes.

### EXAMPLE 32

The glycol montanate in the formulation of Example 31 was replaced with glycerol behenate coester.

A similar sticking time was obtained without the appearance of cloudiness effects.

### EXAMPLE 33

The pentaerythritol coester was tested in the formulation of the preceding example.

No sticking appeared before 29 minutes and 30 seconds.

### EXAMPLES 34 and 35

The coester according to the invention in the above Examples 32 and 33 was replaced with its zinc soap, prepared in situ from an acid mixture similar to that from which the coester was produced.

| | |
|---|---|
| Suspension PVC | 100 |
| Impact modifier | 10 |
| Processing aid | 1 |
| Soya oil | 5 |
| Hydrotalcite | 0.50 |
| Zinc stearate | 0.10 |
| Zinc soap | 0.50 |
| Glycerol hydroxystearate | 1 |
| Oxidized polyethylene wax | 0.20 |
| DHP | 0.20 |

The quantity of zinc stearate can be reduced.

No sticking was observed for 29 minutes.

### EXAMPLES 36 and 37 (Comparative)

Two bulk PVC formulations were compared.

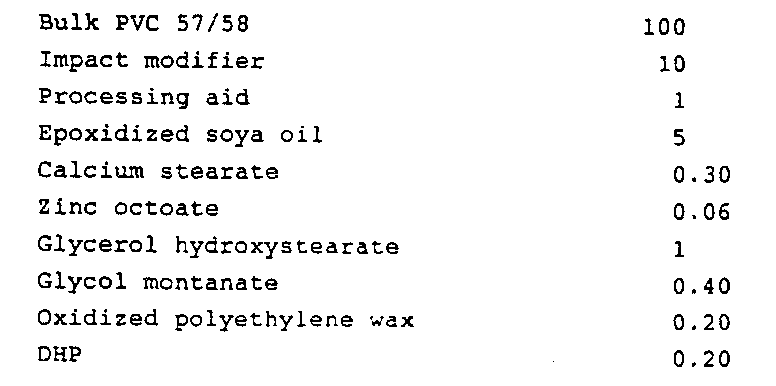

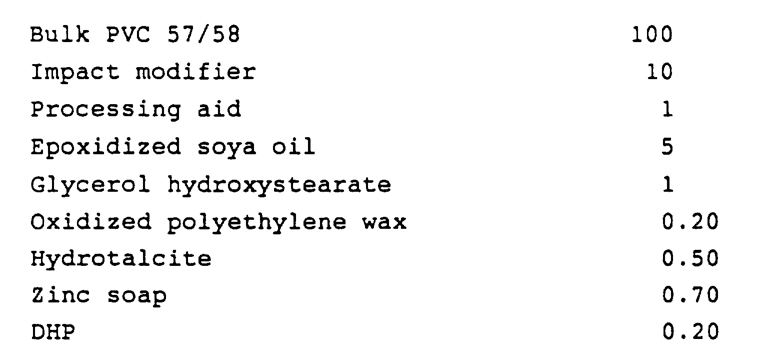

No sticking was observed for 29 minutes in both cases. In the presence of hydrotalcite, therefore, zinc octoate can be left out completely in the presence of zinc soap.

Similar results were obtained with the coesters and soap based on pentaerythritol, and by replacing DHP with Rhodiastab.

### COMPARATIVE EXAMPLE 38

In the presence of tin stabilizers and of a suspension thermoplastic composition, a thermal stability was observed for 20 minutes until blackening and no sticking up to 29 minutes in the case of the following composition.

| | |
|---|---|
| Suspension PVC 57/58 | 100 |
| Impact modifier | 10 |
| Processing aid | 1 |
| Glycerol hydroxystearate | 1 |
| Glycol montanate | 0.40 |
| Oxidized polyethylene wax | 0.20 |
| Monooctyltin octyl trithioglycolate | 1.50 |

### EXAMPLES 39 and 40

When the glycol montanate was replaced in the preceding formulation with the glycerol coester or the pentaerythritol coester, the results obtained were identical with those in Example 38.

### EXAMPLE 41

In the formulation of Example 39, the glycerol coester being replaced with the zinc soap, prepared with the same acid mixture as that from which the coester was produced, the thermal stability was 12 minutes and no sticking was observed until 32 minutes.

The zinc derivatives accentuate the destabilization in the presence of monooctyltin.

### EXAMPLES 42, 43 and 44

The formulation of Comparative Example 38, in which the monooctyltin octyl trithioglycolate was replaced with dioctyltin octyl dithioglycolate, gave a stability of the colour, which was slightly yellow, up to 35 minutes and a no-sticking time of 35 minutes.

The same fomulation, in which the montanate was replaced with the glycerol coester or the pentaerythritol coester, gave the same results.

### EXAMPLE 45 and 46

The zinc soaps of the coesters of Examples 43 and 44 gave thermal stabilities of the order of 25 minutes and no-sticking times of 35 minutes, the colour obtained was of the crystal type.

### EXAMPLE 47 : BOTTLES

The following formulation was tested on extrusion blow-moulding machines.

| | |
|---|---|
| PVC | 100 |
| Impact modifier | 8 |
| Processing aid | 2 |
| Hydrogenated castor oil | 2 |
| Glycerol montanate | 0.40 |
| Calcium stearate | 0.30 |
| Oxidized polyethylene wax | 0.20 |
| DHP | 0.20 |
| Zinc octoate | 0.07 |
| Epoxidized soya oil | 5 |

A comparative study was carried out by using 0.20 pphr of oxidized polyethylene wax marketed by Allied Corporation under the name AC 316 in combination with
1) *glycol montanate
2) *"pure" glycerol behenate
3) *"pure" pentaerythritol behenate
4) glycerol "behenic" (40% as C₂₂) coester
5) pentaerythritol "behenic" (40% as C₂₂) coester
6) calcium glycerol "behenic" soap
7) zinc glycerol "behenic" soap
8) calcium pentaerythritol "behenic" soap
9) zinc pentaerythritol "behenic" soap.

*comparative

The bottles produced on a Mills machine were of good quality at working temperatures of the order of 210°C.

With the formulation containing pure behenate the results were identical. When the pure behenates were replaced with the coesters according to the invention or their soaps, problems appeared because of excessive internal lubrication. The bottles were uneven in shape and variable in thickness, the parison flowing too fast. The quantity of internal lubricant was reduced from 2 pphr to 1.6 pphr and the working temperatures were reduced by 10°C.

The bottles were then of good quality from the viewpoint of clarity and the absence of "fisheyes".

Trials were conducted using the same formulation on DSL 3 and Bekum machines. With quantities of hydrogenated castor oil of 1.6 pphr (the quantity of internal lubricant is lower because these machines have lower hourly outputs), no quality or output problem appeared.

Problems which were similar to those which became apparent on the Mills machine appeared when the pure behenates and montanate were replaced with the coesters or soaps according to the invention.

The quantity of hydrogenated castor was reduced to 1.3 pphr and the temperatures were also lowered by 10°C.

The bottles obtained were of good quality.

It appears, therefore, that the coesters according to the invention give a good external lubrication in the presence of polyethylene wax, and that their action as an internal lubricant is such that the usual proportions of internal lubricant, such as hydrogenated castor oil, in the formulations must be reduced by 20% and the working temperatures in the machines by at least 10°.

### EXAMPLE 48

### Preparation of the glycerol triester

One mole of the acid mixture in the proportions of 10 of arachidic, 37 of behenic, 7 of palmitic and 46 of stearic, that is 305 g, is introduced into a 500-ml reactor fitted with a stirrer, a thermometer, a Dean and Stark separator, a nitrogen delivery and a reflux condenser system.

Heating is applied gradually, with stirring, until the melting, which takes place at about 72°C.

0.4 moles of glycerol (35 g) and 0.68 g of an aqueous sodium hydroxide solution (50%) are then added.

The reaction mixture is kept under a nitrogen atmosphere and the temperature is gradually increased to 190-192°C over about 2 h 30 min. Heating is continued to 210-220°C, until an acid value of 10 is obtained, for about 2 h 30 min.

The mixture is cooled to 130°C, is filtered, and the liquid mass is cast on a stainless steel tray and is left to cool to room temperature.

320 g of glycerol diester with a melting point of 61-62°C were obtained.

### EXAMPLE 49

### Preparation of a soap.

To prepare a 20% calcium glycerol behenic soap, 100 g of the above ester, 18 g of an acid mixture in the proportions given in the preceding example and 1.8 g of CaOH are mixed.

According to the invention, the proportions of soap can be up to 25% of soap in the coester, the proportion of metal being about 1.5%.

## Claims

1. Lubricating composition for thermoplastic compositions, comprising at least one lubricant consisting of a coester or a coester-soap mixture, said coester resulting from the esterification of alimentary aliphatic polyols with a mixture of behenic, arachidic, palmitic and stearic acids, the proportion of behenic acid in this mixture being between 30 and 50 % by weight in combination with at least one polyethylene wax and the soap in said coester-soap mixture is comprised in an amount of up to 25% by weight and is prepared by reacting (i) an acid chosen from stearic, lauric, palmitic, arachidic and behenic acids and their mixtures and (ii) an oxide or an hydroxide of a metal chosen from calcium magnesium and zinc, in the presence of said coester.

2. Lubricating composition according to claim 1, characterized in that the alimentary aliphatic polyol is chosen from glycerol and pentaerythritol.

3. Lubricating composition according to claim 1 or 2, characterized in that the proportion of behenic acid is between 35 and 45 % by weight, preferably equal to 38 ± 2 % by weight.

4. Lubricating composition according to claims 1 to 3 characterized in that the metal soap is a calcium or magnesium or zinc, and preferably calcium soap.

5. Lubricating composition according to claims 1 to 4, characterized in that the wax/lubricant proportion is between 1/10 and 4/3 by weight.

6. Use of a coester or a coester-soap mixture as defined in claim 1 as an internal lubricant for thermoplastic compositions, combined with at least one polyethylene wax.

7. Thermoplastic composition comprising at least a thermoplastic material, a stabitizer and a lubricating composition according to one of claims 1 to 5.

8. Thermoplastic composition acccording to claim 7, characterized in that it comprises 0.2 to 1.5 pphr of lubricating composition.

9. Thermoplastic composition according to claims 7 or 8, characterized in that the thermoplastic material is in the form of dry powder or of a granule mix.

10. Process for the manufacture of a coester-soap mixture as defined in claims 1 to 5, characterized in that the coester resulting from said esterification, and said acid (i) are brought into contact with said oxide or hydroxide of a metal (ii), the saponification reaction taking place in situ.

11. Process of processing PVC, polyvinyl chloride sheet or tube or for the manufacture of bottles made of thermoplastic material, characterized in that a lubricating composition according to claims 1 to 5 is employed.

## Patentansprüche

1. Gleitmittelzusammensetzung für thermoplastische Zusammensetzungen, umfassend wenigstens ein Gleitmittel, bestehend aus einem Co-ester oder einer Co-ester/Seifen-Mischung, wobei dieser Co-ester aus der Veresterung von aliphatischen Polyolen von Nahrungsmittelursprung mit einer Mischung von Behen-, Arachidin-, Palmitin- und Stearinsäuren herrührt, der Anteil von Behensäure in dieser Mischung zwischen 30 und 50 Gew.-% beträgt, in Kombination mit wenigstens einem Polyethylenwachs, und wobei die Seife in dieser Co-ester/Seifen-Mischung in einer Menge bis zu 25 Gew.-% vorliegt und hergestellt ist durch Reaktion von (i) einer aus Stearin-, Laurin-, Palmitin-, Arachidin- und Behensäure ausgewählten Säure und ihre Mischungen (ii) und einem Oxid oder einem Hydroxid eines aus Calcium, Magnesium und Zink ausgewählten Metalls, in Anwesenheit dieses Co-Esters.

2. Gleitmittelzusammensetzung nach Anspruch 1, dadurch gekennzeichnet, daß das aliphatische Polyol von Nahrungsmittelursprung aus Glycerin und Pentaerythrit ausgewählt ist.

3. Gleitmittelzusammensetzung nach Anspruch 1 oder 2, dadurch gekennzeichnet, daß der Anteil von Behensäuren zwischen 35 und 45 Gew.-% liegt, bevorzugt gleich 38 ± 2 Gew.-% ist.

4. Gleitmittelzusammensetzung nach den Ansprüchen 1 bis 3, dadurch gekennzeichnet, daß die Metallseife eine Calcium- oder Magnesium- oder Zinkseife, und bevorzugt Calciumseife ist.

5. Gleitmittelzusammensetzung nach den Ansprüchen 1 bis 4, dadurch gekennzeichnet, daß das wachs/Gleitmittel-Verhältnis zwischen 1/10 und 4/3 liegt.

6. Verwendung eines Co-esters oder Co-ester/Seifen-Mischung entsprechend der Definition von Anspruch 1 als ein inneres Gleitmittel für thermoplastische Zusammensetzungen, kombiniert mit wenigstens einem Polyethylenwachs.

7. Thermoplastische Zusammensetzung, umfassend wenigstens ein thermoplastisches Material, einen Stabilisator und eine Gleitmittelzusammensetzung nach einem der Ansprüche 1 bis 5.

8. Thermoplastische Zusammensetzung nach Anspruch 7, dadurch gekennzeichnet, daß sie 0,2 bis 1,5 Teile pro 100 Teile (0,2 bis 1,5 pphr) an Gleitmittelzusammensetzung umfaßt.

9. Thermoplastische Zusammensetzung nach den Ansprüchen 7 oder 8, dadurch gekennzeichnet, daß das thermoplastische Material in der Form von trockenem Pulver oder einer Granulenmischung vorliegt.

10. Verfahren zur Herstellung einer Co-ester/Seifen-Mischung wie in einem der Ansprüche 1 bis 5 definiert, dadurch gekennzeichnet, daß der aus dieser Veresterung herrührende Co-ester und diese Säure (i) in Kontakt gebracht werden mit diesem Oxid oder Hydroxid eines Metalls (ii), wobei die Verseifung in situ erfolgt.

11. Verfahren zur Verarbeitung von PCV-, Polyvinylchlorid-folie oder -schlauch bei der Herstellung von aus thermoplastischem Material hergestellten Flaschen, dadurch gekennzeichnet, daß eine Gleitmittelzusammensetzung nach den Ansprüchen 1 bis 5 verwendet wird.

## Revendications

1. Composition lubrifiante pour compositions thermoplastiques comportant au moins un lubrifiant constitué par un co-ester ou un mélange co-ester - savon, ledit co-ester résultant de l'estérification de polyols aliphatiques alimentaires avec un mélange d'acides béhénique, arachidique, palmitique et Stéarique, la proportion d'acide béhénique dans ce mélange étant comprise entre 30 et 50 % en poids, en combinaison avec au moins une cire de polyéthylène, le savon étant présent dans le mélange co-ester - savon en une quantité allant Jusqu'à 25 % en poids et étant préparé par réaction (i) d'un acide choisi parmi les acides stéarique, laurique, palmitique, arachidique et béhénique et leurs mélanges ct (ii) d'un oxyde ou hydroxyde de métal choisi parmi le calcium, le magnésium et le zinc, en présence dudit co-ester.

2. Composition lubrifiante selon la revendication 1, caractérisée en ce que le polyol est choisi parmi le glycérol et le pentaérythritol.

3. Composition lubrifiante selon la revendication 1 ou 2, caractérisée en ce que la proportion d'acide béhénique est comprise entre 35 et 45 % en poids, de préférence égale à 38 % ± 2 en poids.

4. Composition lubrifiante selon l'une des revendications 1 à 3, caractérisée en ce que le savon métallique est un savon de calcium, de magnésium ou de zinc, de préférence calcium.

5. Composition lubrifiante selon l'une des revendications 1 à 4, caractérisée en ce que la proportion cire/lubrifiant est comprise entre 1/10 et 4/3 en poids.

6. Utilisation d'un co-ester ou d'un mélange co-ester - savon selon la revendication 1 comme lubrifiant interne pour des compositions thermoplastiques, en combinaison avec au moins une cire de polyéthylène.

7. Composition thermoplastique, comportant au moins du matériau thermoplastique, un stabilisant et une composition lubrifiante selon l'une des revendications 1 à 5.

8. Composition thermoplastique selon la revendication 7, caractérisée en cc qu'elle comporte 0,2 à 1,5 pphr de composition lubrifiante.

9. Composition thermoplastique, selon la revendication 7 ou 8, caractérisée en ce que le matériau thermoplastique est sous forme de poudre sèche ou de mélange en granulés.

10. Procédé de fabrication d'un mélange co-ester-savons selon les revendications 1 à 5, caractérisé en ce que le co-ester résultant de ladite estérification et ledit acide (i) sont mis en présence dudit oxyde ou hydroxyde de métal (ii), la réaction de saponification ayant lieu in situ.

11. Procédé de mise en oeuvre de PVC, de feuilles ou tubes de chlorure de polyvinyle ou de fabrication de bouteilles en matériau thermoplastique, caractérisé en ce que la composition lubrifiante selon les revendications 1 à 5 est utilisée.
